Europäisches Patentamt

(19) European Patent Office

Office européen des brevets

(11) Publication number: **0 171 464**
**B1**

(12) **EUROPEAN PATENT SPECIFICATION**

(45) Date of publication of patent specification: **08.02.89**

(51) Int. Cl.⁴: **F 16 T 1/10**

(21) Application number: **84115338.0**

(22) Date of filing: **13.12.84**

(54) Thermostatic steam trap.

(30) Priority: **19.07.84 US 632508**

(43) Date of publication of application:
**19.02.86 Bulletin 86/08**

(45) Publication of the grant of the patent:
**08.02.89 Bulletin 89/06**

(84) Designated Contracting States:
**CH DE FR GB LI NL SE**

(56) References cited:
**FR-A- 570 457**
**GB-A- 413 906**
**GB-A-1 131 385**
**US-A-1 739 638**
**US-A-3 489 349**

(73) Proprietor: **KEYSTONE INTERNATIONAL
HOLDINGS CORP.**
**2625 Concord Pike P.O. Box 7138**
**Wilmington Delaware 19803 (US)**

(72) Inventor: **Thieme, Horst, R.**
**877 Kulp Road**
**Harleysville Pennsylvania 19438 (US)**

(74) Representative: **Berkenfeld, Helmut, Dipl.-Ing.**
**An der Schanz 2**
**D-5000 Köln 60 (DE)**

Courier Press, Leamington Spa, England.

## Description

The present invention relates to steam traps, and more particularly, to thermostatic steam traps. A thermostatic steam trap is known comprising a body member, and an insert assembly, the body member having an inlet passage at one end thereof, an outlet passage at the other end thereof and means forming a control chamber intermediate the inlet and outlet passages, the insert assembly positioned within the control chamber and including an annular member having a central opening forming a valve seat facing toward the outlet passage, a cage freely movable within the control chamber, a valve member fixed to the cage and adapted to be pulled toward the valve seat upon movement of the cage in a direction away from the annular member, expandable and contractable thermostatic means in form of a bellows within the cage, means extending through the cage in engagement with the thermostatic means and the annular member whereby expansion of said thermostatic means will move the cage in a direction away from the annular member, and centering means to center the cage and the valve member with respect to the valve seat when the thermostatic means is fully expanded. Such thermostatic steam trap is known from FR—A—570 457 and US—A—3 489 349. The basic concept of a thermostatic steam trap of this type is that the bellows contains a small quantity of fluid which has a somewhat lower vaporizing point than that of water, for example, alcohol. When the temperature in the control chamber is below the vaporization point of the bellows fluid, which will occur when condensate is present in the trap, the bellows will be in its closed or contracted condition, thereby permitting the valve to open and discharge the condensate.

The known thermostatic steam trap includes a centering means to center the cage and the valve member with respect to the valve seat when the thermostatic means is fully expanded. This ensures that the valve member in closed position is coaxially positioned with respect to and within the valve seat to thereby guarantee full closure of the steam trap. In the known steam trap, the centering means comprises a suspension including pivot pins, a ball in a spherical bearing, or like means. Such means require careful and delicate manufacturing. They may fail in operation when subjected to contamination or other means affecting easy motion of the bearing parts. Proceeding from this state of the art, it is the underlying objective of the invention to provide a steam trap having parts which are more simple in structure and less sensitive and delicate in operation. The solution to this objective is provided by the invention by a cage of a generally cylindrical shape, having a first end adjacent the annular member and a second end facing in the opposite direction, the first end having a series of equally spaced protuberances adapted to engage the annular member to limit movement of the cage within the control chamber in a direction toward the annular member. The cylindrically shaped cage encompasses and shields the bellows which is a fairly delicate member sensitive to rupture and breakage. The protuberances limit the axial downward movement of the cage to thereby obtain better and free movability of centering means positioned in a protected manner inside of the cage. Such centering means as provided by the invention are characterized in that the first end of the cage has a series of holes formed therein, and a series of legs with one leg extending through each of said holes, said legs being formed as part of a bellows support supporting the bellows within the cage and, upon expansion of the bellows, adapted to bear against the annular member, and a pivot plate intermediate the bellows and the second end portion of said cage, the pivot plate and the legs serving to center the cage and the valve member relative to the valve seat when the bellows is in its fully expanded condition. These legs bearing against the upper surface of the annular member and the pivot plate bearing against the inside of the second end or upper wall of the cage constitute bearing surfaces which are rugged and insensitive in operation even when contaminated.

### Summary of the Invention

More specifically, in the present invention there is provided a thermostatic steam trap having an insert assembly which includes an annular member with a valve seat surrounding a valve member which seats in a direction opposite the normal fluid flow through the trap. The upper end of the valve member is attached to a cup-shaped cage containing a thermally responsive bellows. Movement of the cage in the downward direction is impeded by a plurality of downward protuberances in contact with the above-mentioned annular member. An increase in the temperature of the fluid flowing through the trap actuates the bellows to expand upward pulling the cage and the attached valve member into a seated position, thus blocking the fluid flow into the outlet passage. The thermostatic steam trap self-centers its valve member by way of legs on the bellows assembly and a pair of contour plates which pivot upon one another. The result is a steam trap which is simple in operation and requires less service.

### Description of the Drawings

The operation, features and advantages of the present invention should become apparent from the following description when taken in conjunction with the accompanying drawings, in which:

Figure 1 is an enlarged sectional view of a thermostatic steam trap embodying the present invention;

Figure 2 is a sectional view taken along line 2—2 of Figure 1; and

Figure 3 is an enlarged sectional view of a modified version of the thermostatic steam trap.

## Detailed Description of the Invention

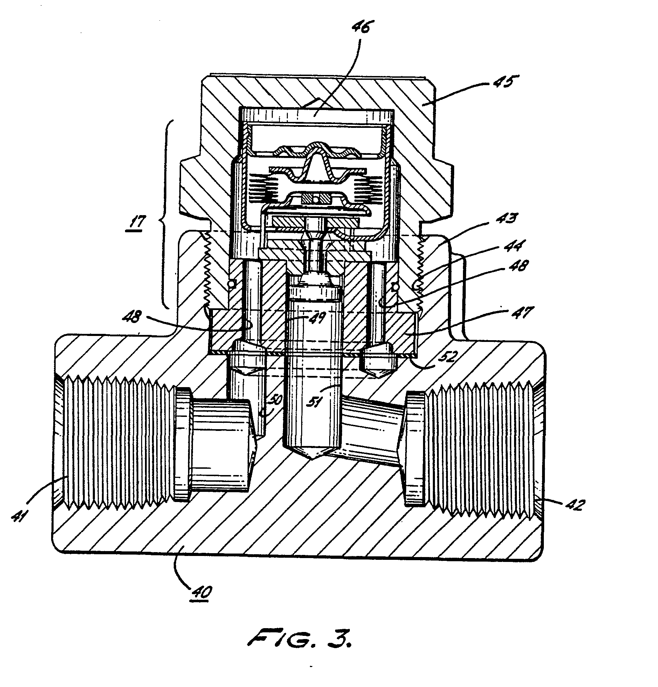

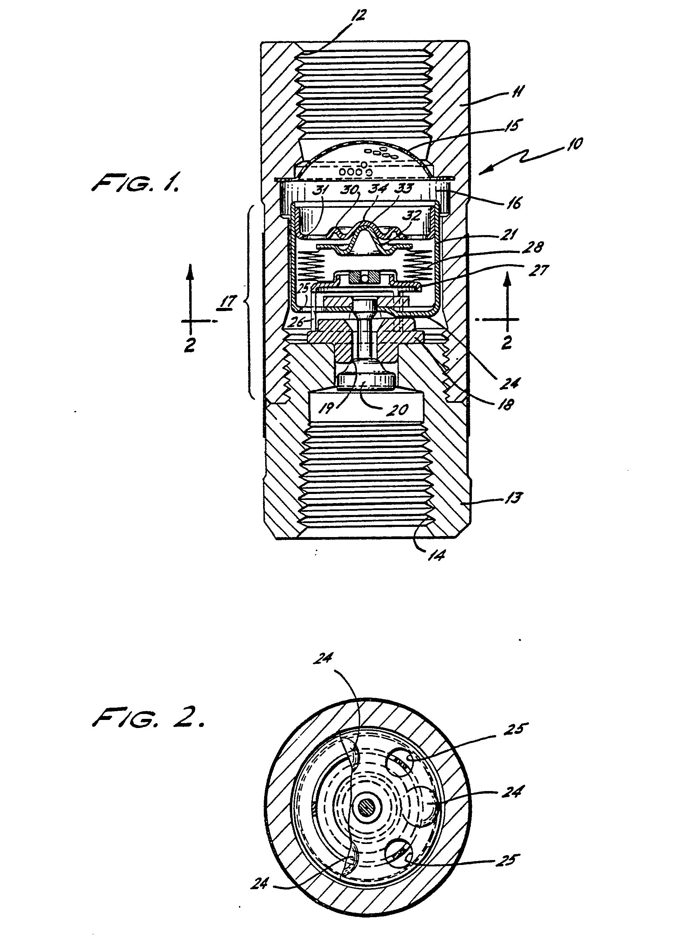

Referring to the drawings, there is illustrated in Figs. 1 and 2 a thermostatic steam trap 10. As may be seen therein, the steam trap 10 has a trap body member 11 having an internally threaded inlet 12 adapted to be connected to a pressurized steam line (not shown) from which condensate is to be drained, and is internally threaded at the opposite end to connect to an outlet fitting 13 with an internally threaded outlet 14 adapted to be connected to a condensate sump line (not shown). A strainer 15 is positioned at the pressurized steam line end of the trap body member 11 separating the inlet 12 from a control chamber 16, the longitudinal center line of which is disposed coaxially with the longitudinal center lines of the inlet 12 and outlet 14.

The control chamber 16 contains an insert assembly 17 which includes an annular member 18 providing a valve seat 19 which completely surrounds the valve member 20. A cup-shaped cage 21, which has affixed to its downward face the valve member 20, is also provided as part of the insert assembly. Three circular downward protuberances 24 are provided on the downward face of the cup, each equally spaced from the base of the affixed valve member 20 and from one another. Three uniform circular holes 25 are formed in the downward cup face, each equally spaced from one another and equally spaced from the protuberances 24. Legs 26, formed on a bellows support member 27, project downwardly one through each of the holes 25, into engagement with the annular member 18 to maintain a bellows 28 at a predetermined location in the control chamber 16. A perforated top plate 30, having a series of openings 31, is secured, such as by welding, to the top of the cage 21. Thus, the bellows is loosely contained within the cage. Pivot means is provided between the bellows and the top plate, which, together with the legs 26, permits the valve member 20 to be self-centering when pulled to its closed position. This pivot means may include a contoured pivot plate 32 at the upper end of the bellows and having an upward central projection 33 engaged within an upward recess 34 in the center of the top plate 31. Alternatively, the pivot plate could have an upwardly facing recess engaged by a downwardly extending projection on the top plate.

In the illustrated embodiment, the bellows 28 contains a small quantity of fluid which has a somewhat lower vaporizing point than that of water, for example, alcohol. When the temperature in the control chamber is below the vaporization point of the bellows fluid, which will occur when condensate is present in the trap, the bellows 28 will be in its closed or contracted condition, thereby permitting the valve to open and discharge the condensate.

The pressure differential between the control chamber 16 and the outlet passage 14 will cause the valve member 20 to be displaced axially away from the valve seat 19, thus allowing the condensate to drain from the control chamber into the outlet passage 14 and into the condensate sump line. As the temperature begins to approach the heat of vaporization for the bellows fluid, the fluid will begin to vaporize with a corresponding expansion in the bellows 28. The legs 26, which, in the pressurized system, contact the annular member 18, prevent downward expansion of the bellows 28. Accordingly, the bellows 28 will expand axially upward or in a direction away from the valve seat with a corresponding upward movement of the pivot plate 32, which displaces the top plate 30 and the attached cage 21 axially upward. The valve member 20, attached to the cage 21, thus begins to close on the valve seat member 19, resulting in a decrease in the discharge of condensate. When the temperature nears the desired closing temperature, the bellows fluid should be at or approaching a completely vaporized state with the bellows 28 near full expansion, the pressure differential between the control chamber 16 and the outlet passage 14 being sufficient to prevent the valve member 20 from seating on the valve seat 19, thus continuing to permit the discharge of condensate. Finally, when the temperature approaches the design closing temperature, the vapor pressure in the bellows 28 is great enough to overcome the pressure difference maintaining the valve member in an unseated position, fully expanding the bellows 28, displacing the cage 21 fully axially upward and seating the valve member 20 against the valve seat 19, thus stopping any discharge through the steam trap. As the system cools, the process reverses itself, again allowing the discharge of condensate.

Because of the difference in vapor pressure relationship between water and alcohol in the bellows, operation of the bellows would tend to cause the trap to operate increasingly below the steam saturation curve with increasing pressure. However, in the steam trap of the present invention, there is a pressure imbalance on the valve member tending to maintain the valve in the open position. The pressure imbalance is equal to the difference between the upstream and downstream pressures times the area of the valve seat opening. This imbalance in pressure will thus resist closing and aid in opening of the trap against the normal forces of the bellows. By careful sizing of the valve seat opening and/or changes in the type of alcohol, operation of the trap can be designed to closely follow the steam saturation curve, preventing undue steam loss, while permitting the maximum condensate discharge.

The legs 26, the upward projection 33 of the pivot plate 32 and the downwardly facing indentation 34 of the top plate 30 all serve to center the cage 21 and properly align the valve member 20.

The invention has the advantage of failing in an open position (upon bellows failure), thus allowing continued discharge of condensate and ready detection of trap failure, since the loss of bellows fluid will collapse the bellows 28 and accordingly open the valve member 20. It has the further advantage of operating very efficiently by closely approximating the saturation curve for steam. Moreover, the device is relatively simple and inexpensive.

Figure 3 shows a modified from of steam trap embodying the invention of the apparatus shown in Figures 1 and 2. This steam trap includes a body member 40 having an inlet opening 41 at one end thereof and an outlet opening 42 at the opposite end thereof. In addition, an upwardly extending boss 43 is provided on the steam trap which, in turn, has a generally cylindrical threaded recess 44. A bonnet 45 is provided which may be threaded into the recess 44 forming a control chamber 46.

Positioned within the recess 44 beneath the bonnet 45 is an adapter plug 47. Inlet and outlet passages 48 and 49 respectively, are provided in the adapter plug which, in turn, communicate with inlet and outlet passages 50 and 51, respectively, in the body member 40, providing fluid communication from the inlet opening 41 through the body portion and adapter to the control chamber and then to the outlet opening 42. When the bonnet is fully inserted into the cylindrical recess 44 of the body portion, it engages against the adapter and forces the adapter tightly against seal means 52, providing a fluid-tight seal between the inlet and outlet passages.

Positioned within the control chamber 46 and secured to the adapter 47, for example by a force fit, is an insert assembly 17 which preferably is a duplicate of the insert assembly 17 of the embodiment of Figures 1 and 2. The insert assembly of Figure 3 operates in exactly the same manner and performs exactly the same function as the insert assembly of the embodiment of Figures 1 and 2. When condensate is present at the control chamber 46, the bellows contracts permitting condensate to pass through the steam trap. Similarly, as the temperature in the control chamber is increased by the presence of steam in the control chamber, the bellows expands causing the valve carried by the insert assembly to close.

## Claims

1. Thermostatic steam trap comprising a body member (11), and an insert assembly (17), the body member (11) having an inlet passage (12) at one end thereof, an outlet passage (14) at the other end thereof and means forming a control chamber (16) intermediate the inlet and outlet passages (12, 14), the insert assembly (17) positioned within the control chamber (16) and including an annular member (18) having a central opening forming a valve seat (19) facing toward the outlet passage (14), a cage (21) freely movable within the control chamber (16), a valve member (20) fixed to the cage (21) and adapted to be pulled toward the valve seat (19) upon movement of the cage (21) in a direction away from the annular member (18), expandable and contractable thermostatic means in form of a bellows (28) within the cage (21), means extending through the cage (21) in engagement with the thermostatic means and the annular member (18) whereby expansion of said thermostatic means will move the cage (21) in a direction away from the annular member (18), and centering means to center the cage (21) and the valve member (20) with respect to the valve seat (19) when the thermostatic means is fully expanded, characterized in that the cage (21) is of a generally cylindrical shape, having a first end adjacent the annular member (18) and a second end facing in the opposite direction, the first end having a series of equally spaced protuberances (24) adapted to engage the annular member (18) to limit movement of the cage (1) within the control chamber (16) in a direction toward the annular member (18).

2. Thermostatic steam trap according to claim 1, characterized in that the first end of the cage (21) has a series of holes (25) formed therein, and a series of legs (26) with one leg (26) extending through each of said holes (25), said legs (26) being formed as part of a bellows support (27) supporting the bellows (28) within the cage (21) and, upon expansion of the bellows (28), adapted to bear against the annular member (18), and a pivot plate (32) intermediate the bellows (28) and the second end portion of said cage (21), the pivot plate (32) and the legs (26) serving to center the cage (21) and the valve member (20) relative to the valve seat (19) when the bellows (28) is in its fully expanded condition.

## Patentansprüche

1. Thermisch gesteuerter Kondensatableiter mit einem Gehäuseglied (11), einer Einsatzanordnung (17), einem Einlaßkanal (12) an einem Ende und einem Auslaßkanal (14) am anderen Ende des Gehäusegliedes (11) und mit Mitteln zum Bilden einer Steuerkammer (16) zwischen dem Einlaß- und dem Auslaßkanal (12, 14), wobei die Einsatzanordnung (17) in der Steuerkammer (16) angeordnet ist und ein ringförmiges Glied (18) mit einer Zentralöffnung enthält, die einen zum Auslaßkanal (14) weisenden Ventilsitz (19) bildet, ein Käfig (21) in der Steuerkammer (16) frei beweglich ist, ein Ventilglied (20) am Käfig (21) befestigt und bei einer Bewegung des Käfigs (21) in einer Richtung weg vom ringförmigen Glied (18) in Richtung auf den Ventilsitz (19) ziehbar ist, mit einem dehn- und zusammenziehbaren thermostatischen Element in Form eines Balges (28) im Käfig (21), mit durch den Käfig (21) in Anlage mit dem thermostatischen Element und dem ringförmigen Glied (18) durchtretenden Mitteln, so daß der Käfig (21) bei einer Dehnung des thermostatischen Elementes vom ringförmigen Glied (18) wegbewegt wird, und mit Zentriermitteln zum Zentrieren des Käfigs (21) und des Ventilgliedes (20) gegenüber dem Ventilsitz (19) bei voller Ausdehnung des thermostatischen Elementes, dadurch gekennzeichnet, daß der Käfig (21) allgemein Zylinderform aufweist mit einem ersten Ende neben dem ringförmigen Glied (18) und einem in die entgegengesetzte Richtung weisenden zweiten Ende, und das erste Ende eine Reihe von in gleichen Abständen liegenden, zum Begrenzen der Bewegung des Käfigs (21) in der Steuerkammer (16) in Richtung auf das ringförmige Glied (18) an diesem anlegbaren Vorwölbungen (24) aufweist.

2. Thermisch gesteurter Kondensatableiter nach Anspruch 1, dadurch gekennzeichnet, daß das erste Ende des Käfigs (21) eine Reihe von in ihm ausgebildeten Löchern (25) und eine Reihe von Beinen (26) aufweist, wobei je ein Bein (26) durch eins der Löcher (25) durchtritt, die Beine (26) als ein Teil einer den Balg (28) in dem Käfig (21) abstützenden Balgabstützung (27) aufgebildet sind und bei einer Dehnung des Balges (28) an das ringförmige Glied (18) anlegbar sind, eine Schwenkplatte (32) zwischen dem Balg (28) und dem zweiten Endabschnitt des Käfigs (21) angeordnet ist und die Schwenkplatte (32) und die Beine (26) bei sich in voll gedehntem Zustand befindendem Balg (28) zum Zentrieren des Käfigs (21) und des Ventilgliedes (20) gegenüber dem Ventilsitz (19) dienen.

**Revendications**

1. Purgeur de vapeur thermostatique comprenant un corps (11) et un ensemble inséré (17), le corps (11) comportant un passage d'admission (12) à une de ses extrémités, un passage d'évacuation (14) à son autre extrémité et un dispositif formant une chambre de commande (16) entre les passages d'admission et d'évacuation (12, 14), l'ensemble inséré (17) étant disposé dans la chambre de commande (16) et comportant un élément annulaire (18) présentant une ouverture centrale formant un siège de valve (19) orienté vers le passage d'évacuation (14), un boîtier (21) mobile librement dans la chambre de commande (16), un obturateur de valve (20) fixé au boîtier (21) et propre à être tiré vers le siège de valve (19) lors du déplacement du boîtier (21) dans un sens s'écartant de l'élément annulaire (18), des moyens thermostatiques pouvant être dilatés et contractés ayant la forme d'un soufflet (28) dans le boîtier (21), des moyens qui s'étendent à travers le boîtier (21) et viennent en contact avec les moyens thermostatiques et l'élément annulaire (18) d'une manière telle que la dilatation des moyens thermostatiques déplace le boîtier (21) dans un sens s'écartant de l'élément annulaire (18) et des moyens de centrage permettant de centrer le boîtier (21) et l'obturateur de valve (20) par rapport au siège de valve (19) lorsque les moyens thermostatiques sont entièrement dilatés, caractérisé en ce que le boîtier (21) est d'une forme dans l'ensemble cylindrique et comporte une première extrémité adjacente à l'élément annulaire (18) et une seconde extrémité orientée dans la direction opposée, la première extrémité comportant une série de protubérances équidistantes (24) propres à entrer en contact avec l'élément annulaire (18) pour limiter le déplacement du boîtier (21) dans la chambre de commande (16) dans un sens orienté vers l'élément annulaire (18).

2. Purgeur de vapeur suivant la revendication 1, caractérisé en ce que la première extrémité du boîtier (21) comporte une série de trous (25) qui y sont ménagés et une série de pieds (26), un pied (26) s'étendant à travers chacun des trous (25), les pieds faisant partie d'un support de soufflet (27) qui assure le support du soufflet (28) dans le boîtier (21) et est conçu pour s'appuyer contre l'élément annulaire (18) lorsque le soufflet (28) s'étend, ainsi qu'une plaque de pivotement (32) située entre le soufflet (28) et la seconde partie d'extrémité du boîtier (21), la plaque de pivotement (32) et les pieds (26) servant à centrer le boîtier (21) et l'obturateur de valve (20) par rapport au siège de valve (19) lorsque le soufflet (28) se trouve dans son état entièrement dilaté.

FIG. 3.

FIG. 1.

FIG. 2.